# EUROPÄISCHE PATENTSCHRIFT

(11) **EP 3 431 898 B1**
(45) Veröffentlichungstag und Bekanntmachung des Hinweises auf die Patenterteilung: **20.09.2023**
(21) Anmeldenummer: 17182274.5
(22) Anmeldetag: 20.07.2017
(51) Int. Cl.: F24S 10/50

(54) **WÄRMEÜBERTRAGUNGSELEMENT UND VERFAHREN ZUR HERSTELLUNG**
HEAT TRANSFER ELEMENT AND METHOD OF MANUFACTURE
ÉLÉMENT DE TRANSFERT THERMIQUE ET PROCÉDÉ DE FABRICATION

(43) Veröffentlichungstag der Anmeldung: 23.01.2019
(73) Patentinhaber: Miba eMobility GmbH, 4663 Laakirchen (AT)
(72) Erfinder: Brandstätter, Andreas, 4851 Gampern (AT)
(74) Vertreter: Ofner, Clemens

(56) Entgegenhaltungen:
- EP-A1- 3 015 790
- WO-A1-83/03661
- DE-A1- 2 747 188
- DE-A1- 3 028 837
- DE-A1- 3 046 596
- JP-A- H0 285 695
- US-A- 4 287 876
- US-A- 4 471 759
- US-A- 5 388 567
- US-A1- 2004 050 532
- US-A1- 2009 151 714
- US-A1- 2016 238 281

## Beschreibung

Die Erfindung betrifft ein Verfahren zur Herstellung eines Wärmeübertragungselements, insbesondere eines Solarthermie-Kollektors, umfassend die Schritte:
- Bereitstellen eines ersten Folienmaterials umfassend eine erste Kunststofffolie,
- Bereitstellen eines zweiten Folienmaterials umfassend eine zweite Kunststofffolie,
- Verbinden des ersten Folienmaterials mit dem zweiten Folienmaterial unter Ausbildung zumindest einer Fluidleitung zwischen dem ersten und dem zweiten Folienmaterial, wobei die erste Kunststofffolie und die zweite Kunststofffolie partiell stoffschlüssig und/oder mechanisch, insbesondere durch Nähen, in Verbindungsbereichen miteinander verbunden werden, sodass zwischen den Verbindungsbereichen zumindest ein Hohlraum entsteht, der die zumindest eine Fluidleitung bildet.

Weiter betrifft die Erfindung ein Wärmeübertragungselement umfassend einen Folienwärmetauscher mit zumindest einer Fluidleitung, die durch die Verbindung eines ersten Folienmaterials mit einem zweiten Folienmaterial zwischen dem ersten und dem zweiten Folienmaterial ausgebildet ist, wobei das erste Folienmaterial eine erste Kunststofffolie aufweist und das zweite Folienmaterial eine zweite Kunststofffolie aufweist, wobei die erste und die zweite Kunststofffolie partiell in Verbindungsbereichen miteinander verbunden sind, sodass zwischen den Verbindungsbereichen zumindest ein Hohlraum ausgebildet ist, der die zumindest eine Fluidleitung bildet.

Solarthermie-Kollektoren, also Kollektoren mit denen aus Sonnenenergie Warmwasser gewonnen wird, werden heute Großteils als starre Elemente mit einer Wanne, einer Wärmedämmung und mit dem Absorber, der von dem zu erwärmenden Wasser (-Glykol-Gemisch) durchströmt wird, ausgeführt. Hinsichtlich des Absorbers selbst gibt es bekanntlich unterschiedliche Ausführungsvarianten.

Neben diesem "herkömmlichen" Kollektortyp wurden im Stand der Technik aber auch schon alternative Ausführungen beschrieben, bei denen versucht wird, zumindest Teile der herkömmlichen Kollektoren durch Kunststoff zu ersetzen, um damit einen größeren Automatisierungsgrad zu erreichen, da für die Herstellung konventioneller Kollektoren ein hoher Grad an Handarbeit erforderlich ist. Durch die höhere Automatisierung des Herstellungsverfahrens können die Kosten für Solarthermie-Kollektoren reduziert werden.

Aus der US 5,388,567 A ist ein Solarheizgerät zum Erhitzen von Wasser für ein Schwimmbecken bekannt, umfassend einen Kollektor mit einer oberen Lage aus unverstärktem Kunststoffmaterial und einer unteren Lage aus unverstärktem Kunststoffmaterial, die um einen Umfangsrand davon verbunden sind, wobei der Kollektor eine Vielzahl von beabstandeten Heißsiegelnähten umfasst, die die beiden Lagen partiell verbinden, um eine Vielzahl von Durchgängen zu definieren, die einen serpentinenförmigen Wasserweg durch den Kollektor bilden.

Die US 2004/050532 A1 beschreibt einen flexiblen Wärmetauscher bestehend aus einem Paar flexibler thermoplastischer Polymerfilme, die teilweise miteinander verschmolzen sind, wodurch zwischen den Polymerfilmen ein Leitungsmuster erzeugt wird, durch das ein Fluid fließt. Weiter beschreibt diese Druckschrift ein Verfahren zur Herstellung des Wärmetauschers.

Die US 4,287,876 A beschreibt eine Solarheizpaneeleinheit in Form eines Kunststoffbeutels mit einer inneren Kammer, die mit einem serpentinenförmigen Kanal versehen ist. Der Beutel hat zwei Seiten, von denen eine aus einer Schicht aus abriebfestem, mattschwarzem Kunststoff und einer versiegelnden Innenschicht aus schwarzer Polyethylenfolie mittlerer Dichte besteht. Die andere Seite enthält eine reflektierende Schicht aus einer Aluminiumfolie. Der Beutel weist Einlässe und Auslässe auf, bei denen Beschläge verwendet werden, die aus mit Gewinde in Eingriff stehenden Teilen bestehen, zwischen denen Flansche angeordnet sind, zwischen denen eine Wand des Beutels festgeklemmt ist.

Der vorliegenden Erfindung liegt die Aufgabe zu Grunde, ein Wärmeübertragungselement kostensparend herstellen zu können. Ein weiterer Teilaspekt der Erfindung ist die Bereitstellung eines einfach aufgebauten Wärmeübertragungselementes, insbesondere eines Solarthermie-Kollektors, der besser für die Selbstmontage geeignet ist.

Die Aufgabe der Erfindung wird mit dem eingangs genannten Verfahren dadurch gelöst, dass als erstes und/oder als zweites Folienmaterial eine Verbundfolie verwendet wird, umfassend die erste oder zweite Kunststofffolie, eine damit verbundene Verstärkungsschicht und eine mit der Verstärkungsschicht verbundene Metallfolie oder eine mit der Verstärkungsschicht verbundene metallisierte weitere Kunststofffolie, wobei die Metallisierung zwischen der Verstärkungsschicht und der weiteren Kunststofffolie angeordnet wird.

Weiter wird die Aufgabe der Erfindung durch das eingangs genannte Wärmeübertragungselement gelöst, bei dem das erste Folienmaterial aus einem Folienlaminat besteht, das die erste Kunststofffolie, eine damit verbundene Verstärkungsschicht, eine mit der Verstärkungsschicht verbundene Metallfolie oder eine mit der Verstärkungsschicht verbundene metallisierte weitere Kunststofffolie aufweist, wobei Metallisierung zwischen der Verstärkungsschicht der weiteren Kunststofffolie angeordnet ist.

Von Vorteil ist dabei, dass das Wärmeübertragungselement einfach aus zwei miteinander verbundenen Folienmaterialien aufgebaut ist bzw. aus diesen besteht. Eine zusätzliche Anordnung bzw. ein zusätzlicher Einbau einer Fluidleitung kann entfallen, da diese durch die partielle Verbindung der beiden Folienmaterialien automatisch entsteht. Die Herstellung des Wärmeübertragungselementes kann großteils automatisiert erfolgen, wobei auch hinsichtlich der Geometrie des Wärmeübertragungselementes und der konkreten Ausgestaltung der Fluidleitung nur sehr wenig Einschränkungen existieren. Das Wärmeübertragungselement ist leicht und kann daher ohne weiteres von einer Person montiert werden, beispielsweise auf dem Dach. Es wird in Summe ein entsprechender Kostenvorteil für den Endverbraucher erreicht, der sich einerseits aus den reduzierten Herstellkosten und andererseits aus der Selbstmontage ergibt. Damit wird die Installation eines Wärmeübertragungselementes für Solarthermie Zwecke deutlich interessanter für den Endverbraucher, woraus wiederum der Vorteil generiert wird, dass mehr konventionelle Energieerzeugungsquellen, wie Erdöl oder Erdgas eingespart werden können.

Als erstes und/oder als zweites Folienmaterial wird eine Verbundfolie verwendet, umfassend die erste oder zweite Kunststofffolie, eine damit verbundene Verstärkungsschicht und eine mit der Verstärkungsschicht verbundene Metallfolie oder eine mit der Verstärkungsschicht verbundene metallisierte weitere Kunststofffolie, wobei die Metallisierung zwischen der Verstärkungsschicht und der weiteren Kunststofffolie angeordnet wird. Durch die Verstärkungsschicht kann eine verbesserte Steifigkeit und Festigkeit speziell bei Temperaturen über Raumtemperatur bis hin zur Siegeltemperatur erreicht werden. Durch die verbesserte mechanische Festigkeit gegenüber Beschädigungen einerseits, aber auch durch das steifere Folienmaterial kann das Gesamtgewicht des Wärmeübertragungselementes verringert werden. Es hat sich zudem gezeigt, dass dieses Folienmaterial eine geringere Kriechneigung aufweist. Weiter weist damit das Folienmaterial eine reduzierte Wärmedehnung auf, was bei Temperaturänderungen zu weniger Spannungen im Wärmeübertragungselement führt. Durch die Metallfolie bzw. die metallisierte weitere Kunststofffolie wird eine bessere Wärmeverteilung über die Fläche des Wärmeübertragungselementes erreicht, wodurch die Effizienz des Wärmeübertragungselementes verbessert werden kann. Durch die bessere Wärmeverteilung aufgrund der verbesserten Wärmeleitfähigkeit des Folienmaterials können zudem Hotspots im Betrieb des Wärmeübertragungselementes besser verhindert werden. Daneben kann damit dem Wärmeübertragungselement aber auch eine Barrierefunktion verliehen werden.

Nach einer bevorzugten Ausführungsvariante des Verfahrens wird die stoffschlüssige Verbindung durch Schweißen oder Kleben hergestellt. Einerseits ist es durch das Schweißen der Folienmaterialien möglich auf Zusatzwerkstoffe zu verzichten, indem der Kunststoff des Folienmaterials verwendet wird. Es kann damit das Verfahren weiter vereinfacht werden, indem die beiden Folienmaterialien lediglich zusammengeführt und einer entsprechenden Schweißvorrichtung zugeführt werden müssen. Es kann damit auf einfachen Weg ein besserer Zusammenhalt der beiden Folienmaterialien erreicht werden, wodurch das Wärmübertragungselement auch höheren thermischen Wechselbelastungen ausgesetzt werden kann, insbesondere wenn Kunststoffe mit dem gleichen thermischen Ausdehnungskoeffizienten verwendet werden. Andererseits kann durch die zusätzliche Verwendung eines Klebers das einsetzbare Werkstoffspektrum ausgedehnt werden.

Besonders vorteilhaft für die einfachere Herstellung des Wärmeübertragungselementes ist es, wenn die erste Kunststofffolie, die zweite Kunststofffolie, die Verstärkungsschicht und die Metallfolie oder die metallisierte weitere Kunststofffolie mit gleicher Flächenausdehnung hergestellt werden. Alle Schichten des Laminats weisen damit eine gleiche große Fläche auf, wodurch die einzelnen Schichten des Laminats einfacher in einer Vorrichtung zur Herstellung des Wärmeübertragungselementes positioniert werden können. Für den Fall, dass das Laminat bereits vorab als Halbzeug hergestellt wird, bevor die beiden Folienmaterialien miteinander verbunden werden, muss durch diese Ausbildung nicht auf die spätere Positionierung der zumindest einen Fluidleitung Rücksicht genommen werden. Das Folienmaterial ist damit universeller unabhängig von der konkreten geometrischen Ausführung des Wärmeübertragungselementes einsetzbar. Zudem kann durch die ununterbrochene Ausdehnung der Metallfolie bzw. der metallisierten weiteren Kunststofffolie über die gesamte Fläche des Wärmeübertragungselementes (in Draufsicht betrachtet) eine weitere Verbesserung der Wärmeverteilung im Wärmeübertragungselement erreicht werden.

Vorzugsweise wird die Verbindung der ersten Kunststofffolie mit der zweiten Kunststofffolie in einer Laminiervorrichtung oder mittels eines Schweißroboters oder durch Pressen durchgeführt. Der Einsatz einer Laminiervorrichtung hat den Vorteil, dass damit die Verbindung der beiden Folienmaterialen miteinander und die Ausbildung von mehreren Fluidleitungen einfacher in einem Schritt automatisiert durchgeführt werden kann, wodurch die Herstellzeit des Wärmeübertragungselementes verkürzt werden kann. Dieses Verfahren eignet sich insbesondere für die Herstellung von großen Stückzahlen an geometrisch gleichbleibenden Wärmeübertragungselementen. Ein größerer Individualisierungsgrad an Wärmeübertragungselementen mit unterschiedlich positionierten Fluidleitungen kann hingegen automatisiert besser erreicht werden, wenn für die Verbindung der Folienmaterialien und die Herstellung der Fluidleitungen ein Schweißroboter eingesetzt wird.

Während oder nach der Verbindung der ersten mit der zweiten Kunststofffolie kann nach einer anderen Ausführungsvariante auf dem ersten und/oder dem zweiten Folienmaterial zumindest ein Verstärkungselement aus einem Kunststoff hergestellt werden. Generell kann das Wärmeübertragungselement auf oder in dem ersten und/oder dem zweiten Folienmaterial zumindest ein Verstärkungselement aufweisen, das mit dem ersten und/oder dem zweiten Folienmaterial verbunden ist. Mit dem Verstärkungselement kann eine weitere Versteifung des Wärmeübertragungselementes erreicht werden, beispielsweise wenn dieses Verstärkungselement in Form eines Rahmens und/oder als Versteifungsrippen für die beiden miteinander verbundenen Folienmaterialien hergestellt wird. Die beiden Folienmaterialien können damit dünner ausgeführt werden. Zudem können damit weitere Funktionselemente in das Wärmeübertragungselement eingebracht werden, wie beispielsweise Aufhängungen für das Wärmeübertragungselement, beispielsweise zur Montage auf einem Dach.

Das zumindest eine Verstärkungselement kann bevorzugt faserverstärkt und/oder mineralisch gefüllt hergestellt werden bzw. eine Faserverstärkung und/oder eine mineralische Füllung aufweisen. Mit der Faserverstärkung und/oder der mineralischen Füllung kann der Wärmeausdehnungskoeffizient des Verstärkungselementes verringert und an den Wert der Folienmaterialien angenähert werden. Somit weist das Wärmeübertragungselement weniger Eigenspannungen und eine geringere Verzugsneigung auf.

Bevorzugt wird das zumindest eine Verstärkungselement in der Laminiervorrichtung oder Presse hergestellt und mit dem ersten und/oder dem zweiten Folienmaterial verbunden. Es kann damit eine weitere Vereinfachung eines automatisierten Herstellungsverfahrens erreicht werden, indem in einer Arbeitsstation möglichst viele Herstellungsschritte vereint werden. Darüber hinaus ist dabei von Vorteil, dass das Folienmaterial im gesamten Herstellungsverfahren weniger häufig erwärmt bzw. erhitzt werden muss, wodurch eine Veränderung der Materialeigenschaften des Folienmaterials besser verhindert werden kann. Hierbei erweist sich auch die Ausbildung des Verstärkungselementes mit einer Faserverstärkung und/oder mineralischen Füllung von Vorteil, da damit die Verarbeitbarkeit des Verstärkungselementes im Laminationsprozess verbessert werden kann.

Es ist weiter von Vorteil, wenn an dem Wärmeübertragungselement Anschlusselemente zur Verbindung des Wärmeübertragungselementes mit einem Fluidkreislauf ausgebildet werden. Durch diese Ausführungsvariante kann die Montierbarkeit des Wärmeübertragungselements verbessert werden, sodass dieses besser für die Selbstmontage durch den Endverbraucher ausgebildet ist.

Bevorzugt werden die Anschlusselemente aus einem Kunststoff hergestellt. Es ist damit möglich, die Ausbildung der Anschlusselemente besser in den Herstellprozess des Wärmeübertragungselementes zu integrieren, da dieses zu einem großen Anteil ebenfalls aus Kunststoff bestehen kann. Gegebenenfalls können die Anschlusselemente in der voranstehend genannten Laminiervorrichtung oder der Presse hergestellt werden. Durch die Ausbildung aus Kunststoff sind die Anschlusselemente zudem besser an die Werkstoffe angepasst bzw. anpassbar, aus denen die Folienmaterialien bestehen, wodurch Wärmespannungen besser vermieden bzw. reduziert werden können.

Obwohl mit der Ausführungsvariante des Wärmeübertragungselements mit der Metallfolie oder der metallisierten weiteren Kunststofffolie bereits eine Vergleichmäßigung der Temperaturbelastung über die Fläche des Wärmeübertragungselementes erreicht und damit der Entstehung von Hotspots entgegengewirkt werden kann, kann es von Vorteil sein, wenn das erste und/oder zweite Folienmaterial mit einer thermotropen Beschichtung versehen wird, die die Höchsttemperatur des Wärmeübertagungselementes im Betrieb auf eine Maximaltemperatur, insbesondere auf maximal 100 °C, beschränkt. Mit dieser Ausführungsvariante kann einer Überhitzung des Wärmeübertragungselementes besser entgegengewirkt werden, wodurch der Einsatz von Kunststoffen für das Wärmeübertragungselement vereinfacht werden kann.

Wie bereits ausgeführt, kann nach einer Ausführungsvariante das erste Folienmaterial mit dem zweiten Folienmaterial vernäht werden. Es ist dabei von Vorteil, wenn zum Vernähen der beiden Folienmaterialien ein Garn verwendet wird, das ausgewählt ist aus einer Gruppe bestehend aus Garnen aus PTFE, Polyester, Polyaramid, Polyamid, Glasfasern und Mischungen dieser daraus. Garne aus diesen Kunststoffen haben sich in Hinblick auf geringe Spannungen im Wärmeübertragungselement und in Hinblick auf die Beständigkeit der Naht bei den im Betrieb des Wärmeübertragungselements vorherrschenden hohen Temperaturen als besonders vorteilhaft herausgestellt.

Nach einer weiteren Ausführungsvariante kann vorgesehen sein, dass die Faserverstärkung (des Folienmaterials) durch ein Gewebe gebildet ist, wodurch eine weitere Verbesserung des mechanischen Verhaltens des Wärmeübertragungselementes erreicht werden kann.

Die aus der Faserverstärkung bestehende Schicht kann ein Flächengewicht zwischen 100 g/m² und 250 g/m² aufweisen. Es kann damit eine nahezu geschlossene Schicht gebildet werden.

Die erste Kunststofffolie und/oder die zweite Kunststofffolie und/oder die metallisierte weitere Kunststofffolie können aus einem Kunststoff besteht/bestehen, der ausgewählt ist aus einer Gruppe bestehend aus PE, POM, PA, PPS, vernetzte Polyolefine, thermoplastische Elastomere auf Ether/Ester Basis, Styrol-Block-Copolymere, Silikonelastomere. Insbesondere diese Kunststoffe haben sich für den Einsatz zur Herstellung des Wärmeübertragungselementes mit einem höheren Automatisierungsgrad durch die bessere Extrusionsfähigkeit als vorteilhaft herausgestellt.

Zum besseren Verständnis der Erfindung wird diese anhand der nachfolgenden Figuren näher erläutert.

Es zeigen jeweils in vereinfachter, schematischer Darstellung:
- Fig. 1: eine Solarthermie-Anlage;
- Fig. 2: einen Ausschnitt aus Wärmeübertragungselement im Querschnitt;
- Fig. 3: eine Anlage zur Herstellung eines Wärmeübertragungselementes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

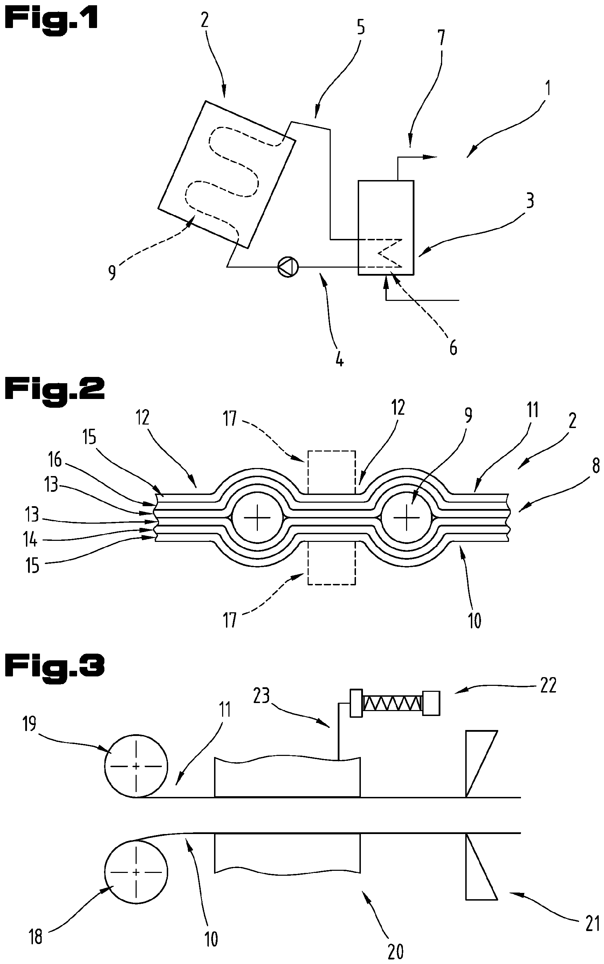

In Fig. 1 ist eine Solarthermie-Anlage 1 in vereinfachter Darstellung gezeigt. Die Solarthermie-Anlage 1 umfasst - wie dies an sich bekannt ist - zumindest ein Wärmeübertragungselement 2 und zumindest einen Wärmespeicher 3. Der Wärmespeicher 3 ist mit dem Wärmeübertragungselement 2 über eine Zulaufleitung 4 und eine Ablaufleitung 5 strömungsverbunden. Die Begriffe "Zulauf" und "Ablauf" sind dabei auf das Wärmeübertragungselement 2 bezogen. Im Wärmespeicher 3 ist ein Wärmetauscher 6 angeordnet. Der Wärmetaucher 6, das Wärmeübertragungselement 2 sowie die Zulaufleitung 4 und die Ablaufleitung 5 sind Teil eines ersten Kreislaufs bzw. bilden diesen. Der Wärmespeicher 3 weist einen weiteren Kreislauf auf bzw. ist Teil dieses weiteren Kreislaufs, über den über eine Leitung 7 beispielsweise erzeugtes Warmwasser bezogen werden kann.

Nach einer alternativen Ausgestaltung der Solarthermie-Anlage 1 kann der Wärmespeicher 3 auch im Wärmeübertragungselement 2 integriert ausgebildet sein.

Derartige Ausführungen von Solarthermie-Anlagen 1 beziehungsweise generell von einkreisigen Systemen sind an sich bekannt, sodass bezüglich weiterer Einzelheiten dazu auf den einschlägigen Stand der Technik verwiesen sei.

Es sei erwähnt, dass der Wärmespeicher 3 nicht zwingenderweise ein Warmwasserspeicher sein muss, sondern zur Wärmespeicherung auch anders ausgestaltet sein kann, beispielsweise als Zeolithspeicher.

Die Solarthermie-Anlage 1 kann auch mehr als ein Wärmeübertragungselement 2 aufweisen, die hinsichtlich der Fluidführung durch die Wärmeübertragungselement 2 in Serie oder parallel in den Wärmekreislauf mit dem Wärmespeicher 3 eingebunden sein können.

In Fig. 2 ist ein Ausschnitt einer bevorzugten Ausführungsvariante des Wärmeübertragungselements 2 im Querschnitt dargestellt.

Das Wärmeübertragungselement 2 umfasst einen Folienwärmetauscher 8. Der Folienwärmetauscher 8 erstreckt sich über eine Fläche die bevorzugt zumindest annähernd, insbesondere zu 100 %, der Fläche des Wärmeübertragungselements 2 entspricht.

Der Folienwärmetauscher 8 weist zumindest eine Fluidleitung 9 auf. Wie aus Fig. 1 ersichtlich ist, kann die Fluidleitung 9 mäanderförmig verlaufend im Wärmeübertragungselement 2 angeordnet sein. Es besteht aber auch die Möglichkeit eines anderen Verlaufs. Beispielsweise kann die Fluidleitung 9 harfenförmig verlaufend oder können von einer gemeinsamen Zulaufleitung mehrere getrennte Fluidleitungen 9 abzweigen, die dann wieder in eine gemeinsame Ablaufleitung 5 einmünden. Die mehreren Fluidleitungen 9 können zumindest annähernd, insbesondere genau, parallel zueinander verlaufend ausgebildet sein. Es sind aber auch Ausführungen möglich, bei denen sich die mehreren Fluidleitungen 9 in Art eines zweidimensionalen oder dreidimensionalen Geästs verzweigen, sodass also auch schräge Führungen des Fluides durch das Wärmeübertragungselement 2 möglich sind.

Es sei an dieser Stelle erwähnt, dass das Fluid bevorzugt flüssig ist. Es sind aber auch gasförmige Fluide verwendbar.

Der Folienwärmetauscher 8 umfasst ein erstes Folienmaterial 10 und ein zweites Folienmaterial 11, die miteinander verbunden sind, oder besteht aus diesen. Das erste Folienmaterial 10 ist in der Ausführungsvariante des Wärmeübertragungselementes 2 für die Verwendung ein der Solarthermie-Anlage 1 unterhalb dem zweiten Folienmaterial 11 angeordnet.

Die Fluidleitung(en) 9 sind keine gesonderten Bauteile des Folienwärmetauschers 8, sondern werden durch die nur partielle Verbindung des ersten Folienmaterials 10 mit dem zweiten Folienmaterial 11 gebildet. Dazu wird das erste Folienmaterial 10 mit dem zweiten Folienmaterial 11 in Verbindungsbereichen 12 verbunden. Die Verbindungsbereiche 12 erstrecken sich entlang der Längserstreckung der Fluidleitung(en) 9, wobei zwischen den Verbindungsbereichen 12 ein nicht verbundener Bereich verbleibt, in dem durch die Beabstandung des ersten Folienmaterials 10 vom zweiten Folienmaterial 11 die Fluidleitung(en) 9 ausgebildet werden. Die Wand bzw. die Wände der Fluidleitung(en) 9 werden also durch das erste Folienmaterial 10 und das zweite Folienmaterial 11 gebildet, vorzugsweise jeweils zur Hälfte.

Das erste Folienmaterial 10 besteht aus einem ersten Folienlaminat, bzw. umfasst diese Bestandteile, wie dies aus Fig. 2 ersichtlich ist. Das erste Folienlaminat umfasst insbesondere eine erste Kunststofffolie 13, eine damit verbundene Verstärkungsschicht 14 und eine mit dieser verbundene Metallfolie 15. Das zweite Folienmaterial 11 umfasst zumindest eine zweite Kunststofffolie 16 bzw. besteht aus dieser.

Bevorzugt sind das erste Folienmaterial 10 und das zweite Folienmaterial 11 jedoch gleich ausgebildet, sodass also auch das zweite Folienmaterial 11 aus einem Folienlaminat besteht bzw. dieses aufweist, wie dies aus Fig. 2 ersichtlich ist. Es besteht aber auch die Möglichkeit, dass sich das erste Folienmaterial 10 hinsichtlich des Werkstoffes oder der Werkstoffe und/oder des Aufbaus vom zweiten Folienmaterial 11 unterscheidet. Für den Fall, dass das zweite Folienmaterial 11 auch aus einem Folienlaminat besteht bzw. dieses aufweist, weist dieses neben der zweiten Kunststofffolie 16 ebenfalls die damit verbundene Verstärkungsschicht 14 und die mit der Verstärkungsschicht 14 verbundene Metallfolie 15 auf bzw. besteht aus diesem Aufbau. Die Verstärkungsschicht 14 und/oder die Metallfolie 15 des zweiten Folienlaminats kann/können unterschiedlich sein zur Verstärkungsschicht 14 und/oder zur Metallfolie 15 des ersten Folienlaminats. Vorzugsweise sind die beiden Verstärkungsschichten 14 und/oder die beiden Metallfolien 15 jedoch gleich ausgebildet.

Die beiden Folienlaminate sind dabei so angeordnet, dass die beiden Kunststofffolien 13 aneinander anliegen und über diese Kunststofffolien 13 die partielle Verbindung der Folienlaminate zum Folienwärmetauscher 8 ausgebildet wird. Falls das zweite Folienmaterial (nur) die zweite Kunststofffolie 16 aufweist, wird diese zweite Kunststofffolie 16 unmittelbar benachbart zur Kunststofffolie 13 des ersten Folienmaterials 10 angeordnet und mit dieser verbunden.

Anstelle einer Metallfolie 15 kann auch eine metallisierte weitere Kunststofffolie verwendet werden, wobei in diesem Fall die Metallisierung zwischen der Verstärkungsschicht 14 und der weiteren Kunststofffolie angeordnet wird.

Die erste Kunststofffolie 13 und/oder die zweite Kunststofffolie 16 und/oder die metallisierte weitere Kunststofffolie besteht/bestehen bevorzugt zu zumindest 80 Gew.-%, insbesondere zu zumindest 90 Gew.-%, aus einem thermoplastischen Kunststoff oder einem Elastomer. Der thermoplastische Kunststoff kann ausgewählt sein aus einer Gruppe umfassend bzw. bestehend aus Polyethylen (PE), Polyoxymethylen (POM), Polyamid (PA), insbesondere PA 6, PA 66, PA 11, PA 12, PA 610, PA 612, Polyphenylensulfid (PPS), vernetzte Polyolefine, bevorzugt Polypropylen (PP), besonders bevorzugt β-nukleiertes PP. Das Elastomer kann ausgewählt sein aus einer Gruppe umfassen bzw. bestehend aus thermoplastische Elastomere wie z.B. thermoplastische Vulkanisate olefin-, amin-, esterbasierende, thermoplastische Polyurethane, insbesondere thermoplastische Elastomere auf Ether-/Ester Basis, Styrol-Block-Copolymere, Silikonelastomere.

Es sei an dieser Stelle erwähnt, dass unter einem Kunststoff ein synthetisches oder natürliches Polymer verstanden wird, das aus entsprechenden Monomeren hergestellt ist.

Vorzugsweise besteht/bestehen die erste Kunststofffolie 13 und/oder die zweite Kunststofffolie 16 und/oder die metallisierte weitere Kunststofffolie aus einer sogenannten Siegelfolie. Dies hat den Vorteil, dass die jeweiligen Folien direkt miteinander verbunden werden können. Es ist aber auch möglich, andere Kunststoffe, wie z.B. duroplastische Kunststoffe bzw. duroplastische Werkstoffe einzusetzen, die dann beispielsweise mit einem Klebstoff miteinander verklebt werden. Hierzu eignen sich insbesondere Zweikomponenten Klebstoffsysteme auf Polyurethanbasis oder Silikonbasis oder auch Heißklebesysteme.

Die erste Kunststofffolie 13 und/oder die zweite Kunststofffolie 16 und/oder die metallisierte weitere Kunststofffolie können Additive enthalten, wie z.B. sterisch gehinderte Phenole, aromatische Amine, Phosphite, Thioester, etc. Die jeweiligen Anteile richten sich nach der Wirksamkeit auf der einen, den Trinkwasservorschriften und den Kosten auf der anderen Seite.

Bevorzugt umfasst/umfassen die Verstärkungsschicht(en) 14 eine oder besteht/bestehen aus einer Faserverstärkung.

Die Faserverstärkung ist bevorzugt als eigene Schicht ausgebildet, die zwischen der ersten Kunststofffolie 13 oder der zweiten Kunststofffolie 16 und der Metallfolie 15 oder der metallisierten weiteren Kunststofffolie angeordnet ist. Sollten in der Faserverstärkungsschicht Hohlräume ausgebildet sein, können diese auch mit dem Kunststoff der ersten Kunststofffolie 13 oder der zweiten Kunststofffolie 16 oder der metallisierten weiteren Kunststofffolie zumindest teilweise ausgefüllt sein.

Die Faserverstärkung kann aus Fasern und/oder Fäden gebildet sein, die ausgewählt sind aus einer Gruppe umfassend oder bestehend aus Glasfasern, Aramidfasern, Kohlenstofffasern, Mineralfasern, wie beispielsweise Basaltfasern, Naturfasern, wie z.B. Hanf, Sisal, und Kombinationen daraus.

Bevorzugt werden Glasfasern als Faserverstärkungsschicht eingesetzt. Der Anteil der Fasern, insbesondere der Glasfasern, an der Faserverstärkung kann zumindest 80 Gew.-%, insbesondere zumindest 90 Gew.-% betragen. Bevorzugt bestehen die Fasern und/oder Fäden der Faserverstärkung ausschließlich aus Glasfasern.

Die Fasern und/oder Fäden können in der Faserverstärkung als Gelege, beispielsweise als Vlies, vorliegen. Bevorzugt wird jedoch ein Gewebe oder ein Gestrick aus den Fasern und/oder Fäden. Es ist dabei auch möglich, dass das Gewebe oder Gestrick nur bereichsweise vorliegt und die restlichen Bereiche der Faserverstärkung durch ein Gelege gebildet werden.

Es ist auch möglich, dass gummierte Fasern und/oder Fäden als bzw. für die Faserverstärkung eingesetzt werden.

Bei Verwendung eines Gewebes sind unterschiedliche Bindungsarten, insbesondere Leinwand-, Köper- oder Atlasbindung, möglich. Bevorzugt wird eine Leinwandbindung eingesetzt.

Das Flächengewicht der Faserverstärkung kann zwischen 10 g/m² und 1000 g/m² betragen. Bevorzugt wird aus voranstehenden Gründen eine Faserverstärkung mit einem Flächengewicht zwischen 100 g/m² und 250 g/m² eingesetzt. Es kann damit eine geschlossene Schicht erzeugt werden, welche eine einheitliche Materialanbindung mit dem Kunststoff der ersten Kunststofffolie 13 und/oder der zweiten Kunststofffolie 16 und/oder der metallisierten weiteren Kunststofffolie ermöglicht. Zudem können damit Eigenschaften des ersten Folienmaterials 10 und/oder des zweiten Folienmaterials 11, wie Wärmeausdehnung oder Kriechneigung, beeinflusst werden. Die Steifigkeit der Faserverstärkung geht beispielsweise mit der dritten Potenz ihrer Dicke, d.h. ihres Flächengewichts, in die Gesamtfolienverbundsteifigkeit ein.

Es ist aber auch möglich, ein offenmaschiges Glasgewebe oder Glasgelege mit einem Flächengewischt zwischen 10 g/m² bis 90 g/m² zu verwenden.

Die Faserverstärkung kann als Einzelschicht ausgebildet sein. Es ist aber auch möglich, dass die Faserverstärkung mehrere, gegebenenfalls voneinander getrennte, Einzelschichten aufweist, beispielsweise zwei oder drei, wobei zumindest einzelne der mehreren Einzelschichten zumindest bereichsweise, vorzugsweise zur Gänze, auch aus zum Rest der Einzelschichten unterschiedlichen Fasern und/oder Fäden bestehen können.

Alternativ oder zusätzlich zur Faserverstärkung kann/können die Verstärkungsschicht(en) 14 eine mineralische Füllung aufweisen. Als mineralische Füllung (mineralischer Füllstoff) kann beispielsweise Calziumcarbonat, Talkum, Quarz, Wollastonit, Kaolin oder Glimmer eingesetzt werden.

Die Metallfolie 15 ist insbesondere eine Aluminiumfolie. Es sind aber auch andere Metalle verwendbar, wie beispielsweise Kupfer, Silber, Gold.

Die Metallfolie kann eine Schichtstärke zwischen 7 µm und 50 µm, insbesondere zwischen 10 µm und 20 µm, aufweisen.

Im Falle des Einsatzes der metallisierten weiteren Kunststofffolie können für die Metallisierung die genannten Metalle verwendet werden. Vorzugsweise weist die Metallisierung eine Schichtdicke auf, die ausgewählt ist aus einem Bereich von 5 nm bis 100 nm. Die metallische Bedampfung der weiteren Kunststofffolie kann mit aus dem Stand der Technik bekannten Verfahren hergestellt werden.

Die erste Kunststofffolie 13 und/oder die zweite Kunststofffolie 16 und/oder die weitere Kunststofffolie, die die Metallisierung aufweist, kann/können eine Schichtdicke zwischen 10 µm und 200 µm aufweisen.

Die Schichtdicke der Verstärkungsschicht 14 ergibt sich aus dem voranstehend genannten Flächengewicht.

Das erste Folienmaterial 10 und/oder das zweite Folienmaterial 11 kann/können insbesondere folgenden Aufbau in der angegebenen Reihenfolge aufweisen:
- erste Kunststofffolie 13 bzw. zweite Kunststofffolie 16 aus PP;
- Verstärkungsschicht 14 aus einem Glasfasergewebe mit einem Flächengewicht von 200 g/m²;
- Metallfolie 15 aus Aluminium mit einer Schichtdicke von 12 µm.

Für den Fall, dass das zweite Folienmaterial 11 nur aus der zweiten Kunststofffolie 16 besteht, wird hierfür bevorzugt ein Polyethylenterephthalat (PET) als Kunststoff verwendet.

Das erste und/oder das zweite Folienmaterial 10, 11 können zumindest eine weitere Schicht aufweisen. Beispielsweise können das erste und/oder das zweite Folienmaterial 10, 11 eine zusätzliche Folie, insbesondere eine zusätzliche Kunststofffolie, aufweisen, die gefärbt ist, insbesondere schwarz gefärbt ist. Es kann damit die Effizienz des Folienwärmetauschers 8 erhöht werden, insbesondere wenn dieser in der Solarthermie-Anlage 1 verwendet wird. Diese (schwarz) gefärbte Folie ist bevorzugt auf der Metallfolie 15 oder der zweiten Kunststofffolie 16 angeordnet und mit dieser verbunden.

Es besteht aber auch die Möglichkeit, dass zumindest eine der ersten Kunststofffolie 13 und/oder der zweiten Kunststofffolie 16 und/oder der weiteren Kunststofffolie gefärbt ausgebildet wird, insbesondere schwarz gefärbt ausgebildet wird.

Zusätzlich oder alternativ zur Verwendung einer gefärbten Kunststofffolie (es werden insbesondere durchgefärbte Kunststofffolien verwendet), kann die Färbung, insbesondere die Schwarzfärbung, auch mit einer Beschichtung zumindest einer der ersten Kunststofffolie 13 und/oder der zweiten Kunststofffolie 16 und/oder der weiteren Kunststofffolie und/oder der Metallfolie 15 und/oder der Verstärkungsschicht 14 erreicht werden. Die Beschichtung kann beispielsweise ein entsprechender Lack sein.

Es ist also von Vorteil, wenn der Folienwärmetauscher 8 zumindest eine gefärbte Oberfläche oder eine gefärbte Schicht aufweist, wobei als Farbe insbesondere Schwarz bevorzugt wird. Eine Verbesserung der Effizienz des Folienwärmetauschers 8 kann auch durch eine selektive Beschichtung oder eine selektive Einfärbung zumindest einer der Schichten des ersten und/oder des zweiten Folienmaterials 10, 11 erreicht werden. Die Selektivität ist dabei zur Erhöhung des Anteils an absorbierter Sonnenstrahlung vorgesehen. Beispiele für derartige selektiven Schichten oder Einfärbungen sind Schwarzchrom oder eine aufgedampfte blaue Schicht.

Es sei darauf hingewiesen, dass die voranstehend ausgeführte Schwarzbeschichtung oder Schwarzeinfärbung eine nicht-selektive Beschichtung oder Einfärbung ist. Eine selektive Beschichtung bzw. Färbung weist hingegen neben einer guten Wärmeabsorption auch relativ niedrige Emissionswerte auf.

Das erste und/oder das zweite Folienmaterial 10, 11 können auch noch zumindest eine weitere Schicht aufweisen, wie beispielsweise zumindest eine weitere Verstärkungslage und/oder zumindest eine Primerschicht und/oder zumindest eine thermotrope Schicht.

Obwohl das erste Folienmaterial 10 und das zweite Folienmaterial 11, falls dieses ebenfalls ein Folienlaminat ist, prinzipiell in Form der Einzelfolien zur Herstellung des Folienwärmetauschers 8 eingesetzt werden können, sodass das bzw. die Folienlaminat(e) erst im Zuge der Herstellung des Folienwärmetauschers 8 ausgebildet werden, ist es von Vorteil, wenn das erste Folienmaterial 10 und/oder das zweite Folienmaterial 11 als (laminiertes) Halbzeug eingesetzt werden.

Zur Verbindung der Einzelschichten zum ersten bzw. zum zweiten Folienmaterial 10, 11 können diese miteinander über Klebstoffe verklebt werden. Hierzu eignen sich die voranstehend genannten Klebstoffe. Neben Klebstoffen kann auch die Coextrusion und die Extrusionsbeschichtung als Verbindungsmöglichkeit eingesetzt werden. Selbstverständlich ist auch eine Kombination möglich, dass mehrere Kunststoffe coextrudiert und mit einer extrusionsbeschichteten Metall- oder (Faser)Verstärkungsschicht miteinander klebekaschiert werden. Generell können sämtliche bekannte Verfahren zur Herstellung von Verbundfolien bzw. Folienlaminaten verwendet werden.

In der bisherigen Darstellung der Erfindung wurde der Folienwärmetauscher 8 das erste und das zweite Folienmaterial 10, 11 aufweisend bzw. daraus bestehend beschrieben. Nach einer weiteren Ausführungsvariante kann aber vorgesehen sein, dass der Folienwärmetauscher noch zumindest ein weiteres Folienmaterial aufweist, das mit dem ersten oder dem zweiten Folienmaterial 10, 11 partiell verbunden ist, wie dies voranstehend zur Verbindung des ersten Folienmaterials 10 mit dem zweiten Folienmaterial 11 beschrieben wurde. Die Fluidleitungen 9 können damit in zumindest zwei Ebenen übereinander angeordnet sein, wobei sie in diesem Fall bevorzugt nicht deckungsgleich, sondern seitlich versetzt zueinander auf die voranstehend beschriebene bzw. die nachfolgend noch zu beschreibende Art und Weise ausgebildet werden. In diesem Fall ist es von Vorteil, wenn das erste Folienmaterial 10 oder das zweite Folienmaterial 11 auf beiden äußeren Seiten (Oberflächen) die erste Kunststofffolie 13 oder die zweite Kunststofffolie 16 aufweisen, sodass über diese der Verbund mit dem weiteren Folienmaterial hergestellt werden kann, also insbesondere wieder zwei Siegelfolien miteinander verbunden werden können.

Prinzipiell können noch zusätzliche ein oder mehrschichtige Folienmaterialien, insbesondere mit dem voranstehend beschriebenen Aufbau, in dem Folienwärmetauscher 8 angeordnet werden.

Nach einer weiteren Ausführungsvariante des Folienwärmetauscher 8 kann vor gesehen sein, dass auf dem ersten und/oder dem zweiten Folienmaterial 10, 11 zumindest ein, insbesondere faserverstärktes, Verstärkungselement 17 angeordnet und mit dem ersten und/oder dem zweiten Folienmaterial 10, 11 verbunden ist, wie dies in Fig. 2 strichliert dargestellt ist. Dieses zumindest eine Verstärkungselement 17 dient insbesondere der zumindest bereichsweisen Versteifung des Folienwärmetauschers 8. Das Versteifungselement 17 kann dazu beispielsweise entlang des Umfangs des ersten und/oder des zweiten Folienmaterials 10, 11 in Art eines Rahmens angeordnet bzw. ausgebildet sein. Es besteht alternativ oder zusätzlich dazu aber auch die Möglichkeit, wie dies in Fig. 2 dargestellt ist, dass zumindest ein derartiges Versteifungselement 17 entlang der zumindest einen Fluidleitung 9, insbesondere über einen Großteil seiner Länge, angeordnet bzw. ausgebildet ist. Mit "Großteil" ist dabei gemeint, dass sich das zumindest eine Verstärkungselement 17 über eine Länge erstreckt, die zumindest 50 %, insbesondere zumindest 70 %, vorzugsweise zumindest 80 %, der Gesamtlänge der zumindest einen Fluidleitung 9 entspricht. Der Folienwärmetauscher 8 kann also einen Rahmen und/oder "Versteifungsrippen" im Bereich der Fluidleitung(en) 9 aufweisen, der/die durch das zumindest eine Verstärkungselement 17 gebildet werden, wobei diese Elemente auf dem ersten Folienmaterial 10 und/oder dem zweiten Folienmaterial 11 (bzw. einem weiteren Folienmaterial) angeordnet bzw. ausgebildet sind. Für den Fall, dass das zumindest eine Verstärkungselement 17 mit dem ersten und dem zweiten Folienmaterial 10, 11 (bzw. dem weiteren Folienmaterial) verbunden ist, kann die Verbindung auch im Randbereich erfolgen, sodass sich das Verstärkungselement 17 vom ersten Folienmaterial 10 bis in den Bereich des zweiten Folienmaterials 11 erstreckt.

Neben der reinen Verstärkungsfunktion des zumindest einen Verstärkungselementes 17 kann dieses auch noch weitere Funktionen aufweisen. Beispielsweise kann das Verstärkungselement 17 als Aufhängung bzw. generell zur Befestigung des Wärmeübertragungselements 2 verwendet werden, beispielsweise zur Montage auf einem Dach.

Die in Fig. 2 dargestellt konkrete Ausführungsform des Verstärkungselementes 17 hat demgemäß nur beispielhaften Charakter. Das Verstärkungselement 17 kann beispielsweise leistenförmig ausgebildet sein, es kann aber auch eine andere Form aufweisen, beispielsweise in Form einer Öse oder dgl. ausgebildet sein.

Weiter ist die in Fig. 2 dargestellte Querschnittsform des zumindest einen Verstärkungselements 17 nur beispielhaft zu verstehen. Das zumindest eine Verstärkungselement 17 kann beispielsweise einen quadratischen, rechteckigen, teilrunden, halbrunden, etc. Querschnitt aufweisen.

Obwohl der Ausdruck "zumindest ein Verstärkungselement 17" verwendet wurde, soll ausdrücklich darauf hingewiesen werden, dass der Folienwärmetauscher 8 mehr als ein Verstärkungselement 17 aufweisen kann, beispielsweise zwei, drei, vier, etc. Weiter kann das oder können die Verstärkungselment(e) 17 nur auf dem ersten Folienmaterial 10 oder nur auf dem zweiten Folienmaterial 11 oder auf dem ersten und dem zweiten Folienmaterial 10, 11 angeordnet bzw. ausgebildet sein.

Das zumindest eine Verstärkungselement 17 besteht insbesondere zumindest teilweise oder zur Gänze aus einem Kunststoff. Der bevorzugt verwendete Kunststoff zur Herstellung des zumindest einen Verstärkungselementes 17 kann aus den voranstehend genannten Kunststoffen ausgewählt sein.

Für die Faserverstärkung des zumindest einen Verstärkungselementes 17 können die voranstehend genannten Fasern und/oder Fäden bzw. die Werkstoffe hierfür verwendet werden. Der Anteil der Faserverstärkung an dem zumindest einen Verstärkungselement 17 kann ausgewählt sein aus einem Bereich von 5 Gew.-% bis 70 Gew.-%. Den Rest auf 100 Gew.-% bildet der Kunststoff, gegebenenfalls zusammen mit entsprechenden Additiven, wie diese voranstehend genannt wurden.

Zusätzlich oder alternativ dazu kann das zumindest eine Verstärkungselement 17 auch eine mineralische Füllung aufweisen. Bezüglich der mineralischen Füllstoffe sei auf voranstehende Ausführungen verwiesen.

Nach einer bevorzugten Ausführungsvariante wird das zumindest eine Verstärkungselement 17 aus einem glasfaserverstärkten Polyamid hergestellt.

In der bevorzugten Ausführungsvariante des Wärmeübertragungselements 2 weist dieses auch entsprechende Anschlusselemente für den Anschluss der Zulaufleitung 4 und der Ablaufleitung 5 (Fig. 1) auf. Prinzipiell können diese als herkömmliche Anschlusselemente ausgebildet sein, wie sie von Solarthermie Anlagen nach dem Stand der Technik bekannt sind. In der bevorzugten Ausführungsvariante sind diese Anschlusselemente aber ebenfalls zumindest teilweise, insbesondere zur Gänze, aus einem Kunststoff hergestellt, wobei als Kunststoffe die voranstehend genannten Kunststoffe verwendet werden können. Beispielsweise können die Anschlusselemente in Art einer Schlauchkupplung ausgeführt sein, wodurch sich die Montage des Wärmeübertragungselementes 2 weiter vereinfachen lässt. Das jeweilige Gegenstück dieser Kupplung(en) kann auf der Zulaufleitung 4 bzw. der Ablaufleitung 5 angeordnet sein. Es sei in diesem Zusammenhang erwähnt, dass die konkrete Platzierung der Anschlusselemente abhängig ist von der konkreten Ausführung der Fluidleitung(en) 9. Für den Fall, dass nur eine mäanderförmig oder harfenförmig ausgeführte Fluidleitung 9 vorgesehen ist, wie diese in Fig. 1 angedeutet ist, befinden sich die Anschlusselemente am Anfang und am Ender dieser Fluidleitung 9. Für den Fall, dass mehrere Fluidleitungen 9 vorgesehen sind, können diese von einem gemeinsamen Sammelkanal abzweigen und in einen gemeinsamen weiteren Sammelkanal einmünden. In diesem Fall sind die Anschlusselemente am Sammelkanal und am weiteren Sammelkanal angeordnet.

Die Sammelkanäle können wie die Fluidleitung(en) 9 durch die nur partielle Verbindung des ersten Folienmaterials 10 mit dem zweiten Folienmaterial 11 hergestellt werden. Es sei dazu auf die entsprechenden voranstehenden Ausführungen verwiesen.

Gleiches gilt für den Fall, dass der Folienwärmtauscher 8 weitere Folienmaterialien aufweist.

Nach einer anderen Ausführungsvariante des Folienwärmetauschers 8 kann vorgesehen sein, dass das erste und/oder zweite Folienmaterial mit einer Beschichtung versehen wird, die die Höchsttemperatur des Wärmeübertagungselementes 2 im Betrieb auf einen Maximalwert, insbesondere auf maximal 100 °C, beschränkt.

Wie bereits voranstehend ausgeführt, werden zur Herstellung des Wärmeübertragungselementes 2, insbesondere des Folienwärmetauschers 8, bevorzugt Folienverbunde bzw. Folienlaminate verwendet, die den entsprechenden Aufbau aufweisen, wie dies ebenfalls bereits voranstehend ausgeführt wurde. Auf die Möglichkeit des Einsatzes von Einzelfolien wurde ebenfalls bereits hingewiesen.

In den bevorzugten Ausführungsvarianten des Verfahrens zur Herstellung des Wärmeübertragungselementes 2, insbesondere des Folienwärmetauschers 8, sind das erste Folienmaterial 10 und das zweite Folienmaterial 11 gleich ausgebildet. Es wird im Folgenden daher nur auf diese Ausführungsvariante eingegangen. Die nachfolgenden Ausführungen können aber auch auf andere Folienmaterialien bzw. auf Einzelfolien übertragen werden. Insbesondere ist es auch möglich lediglich die erste Kunststofffolie 13 und die zweite Kunststofffolie 16 zur Herstellung des Wärmeübertragungselementes 2 zu verwenden.

Das erste und das zweite Folienmaterial 10, 11 sind vorzugsweise als Rollenware auf Vorratsrollen 18, 19 vorrätig gehalten bzw. werden auf diesen Vorratsrollen 18, 19 für die weitere Verarbeitung bereitgestellt, wie dies in Fig. 3 dargestellt ist.

In einer ersten Ausführungsform des Verfahrens zur Herstellung des Wärmeübertragungselementes 2 werden das erste Folienmaterial 10 und das zweite Folienmaterial 11 einer Formgebungsvorrichtung 20, insbesondere einer Laminierpresse bzw. einer Laminiervorrichtung, zugeführt. Das erste Folienmaterial 10 und das zweite Folienmaterial 11 sind dabei derart orientiert, dass die erste Kunststofffolie 13 unmittelbar benachbart zur zweiten Kunststofffolie 16 (Fig. 2) angeordnet ist und damit die erste mit der zweiten Kunststofffolie 13, 16 verbunden werden kann.

In der Formgebungsvorrichtung 20 erfolgt die Verbindung des ersten Folienmaterials 10 mit dem zweiten Folienmaterial 11 und die gleichzeitige Ausbildung der Fluidleitung(en) 9. Dazu weist die Formgebungsvorrichtung 20 entsprechende Stege auf, sodass die beiden Folienmaterialien 10, 11 nur partiell miteinander verbunden werden und die Fluidleitungen 9 zwischen den Verbindungsbereichen 12 (Fig. 2) ausgebildet werden. Die Verbindung der beiden Folienmaterialien 10, 11 kann dabei durch Einwirkung einer erhöhten Temperatur und eines erhöhten Druckes, wie dies bei Laminieren bzw. Heißsiegeln bekannt ist, erfolgen. Die konkrete Temperatur richtet sich dabei nach den verwendeten Kunststoffen, liegt aber jedenfalls über dem Schmelzpunkt bzw. der Glasübergangstemperatur der verwendeten Kunststoffe. Übliche Temperaturen sind ausgewählt aus einem Bereich von 100 °C bis 350 °C. Der Druck kann ausgewählt sein aus einem Bereich von 0 bar bis 1000 bar.

In dieser Formgebungseinrichtung 20 erfolgt also die Ausbildung der Fluidleitung(en) 9 in einem einzigen Schritt. Der konkrete Verlauf der Fluidleitung(en) 9 bzw. die konkrete Anzahl kann über die Stege der Formgebungsvorrichtung 20, die zur Anlage an das erste und zweite Folienmaterial 10, 11 gelangen, festgelegt werden. Es ist damit also eine Serienfertigung von gleichbleibenden Wärmeübertragungselementen 2 auf einfache Weise realisierbar bzw. automatisierbar, sodass der Anteil an Handarbeit zur Herstellung des Wärmeübertragungselementes 2 deutlich reduziert werden kann.

Anstelle der Laminiervorrichtung kann auch eine Presse verwendet werden, insbesondere zur Herstellung von langfaserverstärkten Folienmaterialien 10, 11 bzw. einem langfaserverstärkten Wärmeübertragungselement 2. Es werden dabei die Fasern mit dem Kunststoff imprägniert und verpresst, wodurch das faserverstärkte Folienmaterial entsteht.

Unter dem Begriff "Langfaser" werden im Sinne dieser Beschreibung Fasern verstanden, die eine Mindestlänge von 1 mm, insbesondere eine Länge zwischen 1 mm und 50 mm aufweisen. Im Sinne der Beschreibung umfasst der Begriff aber auch Fasern mit einer Länge von über 50 mm, die auch als Endlosfasern bezeichnet werden können.

Die Herstellung mittels Presse kann nach dem Direktverfahren mit der Ein- oder Zweimaschinentechnologie erfolgen.

Bei der Zweimaschinentechnologie werden zur Herstellung der Formmasse zwei in Reihe geschaltete Extruder eingesetzt. Der erste übernimmt die Compoundierung des Polymers, während im zweiten Extruder die Einarbeitung der Fasern in die Schmelze erfolgt. Damit ist eine flexiblere Prozessführung möglich.

Das oder die so hergestellten Folienmaterial(ien) 10, 11 können dann in der Formgebungsvorrichtung 20 zur Verbindung der beiden und Ausbildung der Fluidleitung(en) 9 weiterverarbeitet werden.

Nach der Formgebung in der Formgebungsvorrichtung 20 und nach der Abkühlung des Folienwärmtauschers 8 wird dieser noch auf die endgültige Länge in einer Trennvorrichtung 21 abgelängt, beispielsweise geschnitten oder gestanzt. Die Trennvorrichtung 21 kann gegebenenfalls in die Formgebungseinrichtung 20 integriert sein.

Für eine höheren Grad der Individualisierbarkeit des Wärmeübertragungselementes 2 bei hohem Automatisierungsgrad kann nach einer anderen Ausführungsvariante des Verfahrens vorgesehen sein, dass das erste Folienmaterial 10 mit dem zweiten Folienmaterial 11 mit Hilfe eines Schweißroboters durchgeführt wird. Es können damit die Verbindungsbereiche 12 (Fig. 2) individuell festgelegt und programmiert werden, sodass die Anordnung bzw. Ausbildung der Fluidleitung(en) sehr flexibel an individuelle Bedürfnisse angepasst werden kann. Dieses Verfahren ist daher vor allem für die automatisierte Einzelanfertigung von Wärmeübertragungselementen 8 besser geeignet. Die für die Verbindung der beiden Folienmaterialen 10, 11 erforderliche Wärme bzw. der Klebstoff kann damit genau mit dem Roboterkopf an den entsprechenden Stellen zugeführt werden.

Bei der Ausführungsvariante des Verfahrens mit der Formgebungsvorrichtung 20 wird bevorzugt Wärme zur Verbindung der beiden Folienmaterialien 10, 11 eingesetzt. Es ist aber auch bei dieser Verfahrensvariante möglich, die Verbindung über einen Klebstoff herzustellen, wozu der Klebstoff an den entsprechenden Stellen zugeführt werden kann.

Bei den beiden genannten Ausführungsvarianten des Verfahrens zur Herstellung des Folienwärmetauschers 8 erfolgt die Verbindung des ersten Folienmaterials 10 mit dem zweiten Folienmaterial 11 stoffschlüssig entweder über verschweißen oder durch kleben, wobei auch Mischvarianten dieser Verfahren möglich sind. Generell kann allgemein das erste Folienmaterial 10 mit dem zweiten Folienmaterial 11 stoffschlüssig verbunden werden, also auch durch Anwendung anderer Verfahren.

Bezüglich der verwendbaren Klebstoffe sei auf die voranstehend genannten verwiesen. Alternativ oder zusätzlich zur stoffschlüssigen Verbindung des ersten Folienmaterials 10 mit dem zweiten Folienmaterial 11, insbesondere der ersten Kunststofffolie 13 mit der zweiten Kunststofffolie 16, können das erste Folienmaterial 10 und das zweite Folienmaterial 11 auch durch Nähen miteinander verbunden werden. Zum Vernähen wird dazu vorzugsweise ein Garn verwendet, das ausgewählt ist aus einer Gruppe bestehend aus Garnen aus Polytetrafluorethylen (PTFE), Polyester, Polyaramid, Polyamid, Glasfasern und Mischungen dieser daraus.

Generell kann das erste Folienmaterial 10 mit dem zweiten Folienmaterial 11 alternativ oder zusätzlich zur stoffschlüssigen Verbindung mechanisch verbunden werden. Beispielsweise können die beiden Folienmaterialien durch Nieten, Schrauben oder dergleichen miteinander verbunden werden.

Von Vorteil ist es bei allen Ausführungsvarianten der Erfindung, wenn die erste Kunststofffolie 13, die zweite Kunststofffolie 16, die Verstärkungsschicht 14 und die Metallfolie 15 oder die metallisierte weitere Kunststofffolie, und somit das erste und das zweite Folienmaterial 10, 11, mit gleicher Flächenausdehnung (jeweils in Draufsicht betrachtet) hergestellt werden. Die Fluidleitung(en) 9 können damit jeweils zur Hälfte aus dem ersten und dem zweiten Folienmaterial 10, 11 hergestellt werden, wodurch der Folienwärmtauscher 8 geringeren mechanischen Spannungen unterliegt.

Wie bereits voranstehend erwähnt, kann das Wärmeübertragungselement 2 bzw. der Folienwärmetauscher 8 nach einer Ausführungsvariante zumindest ein Verstärkungselement 17 aufweisen. Es ist dabei von Vorteil, wenn dieses zumindest eine Verstärkungselement 17 im Zuge der Ausbildung der Fluidleitung(en) 9 hergestellt werden kann. Nach einer Ausführungsvariante des Verfahrens zur Herstellung des Wärmeübertragungselementes 2 kann dazu vorgesehen sein, dass die Formgebungsvorrichtung 20 beispielsweise mit einem Extruder 22 über zumindest eine Leitung 23 verbunden ist. In der Formgebungsvorrichtung 20 selbst können in der Form entsprechende Freistellungen für die Ausbildung des zumindest einen Verstärkungselementes 17 vorgesehen bzw. ausgebildet sein. Der schmelzflüssige Kunststoff aus dem Extruder 22 kann damit diesen Freistellungen zugeführt werden, sodass das zumindest eine Verstärkungselement 17 gleichzeitig mit oder unmittelbar nach der Verbindung der Folienmaterialien 10, 11 miteinander und der Ausbildung der zumindest einen Fluidleitung(en) 9 hergestellt werden kann, beispielsweise durch Spritzpressen. Es wird damit auch gleichzeitig die Verbindung des zumindest einen Verstärkungselementes 17 mit dem ersten und/oder zweiten Folienmaterial 10, 11 erreicht.

Nach einer weiteren Ausführungsvariante des Verfahrens ist vorgesehen, dass an dem Wärmeübertragungselement 2 Anschlusselemente zur Verbindung des Wärmeübertragungselementes 2 mit einem Fluidkreislauf, insbesondere mit der Zulaufleitung 4 und der Ablaufleitung 5 (Fig. 1), ausgebildet werden. Diese Anschlusselemente werden gemäß einer weiteren Ausführungsvariante des Verfahrens aus einem Kunststoff hergestellt. Es ist dabei möglich, dass die Anschlusselemente analog zu dem zumindest einen Verstärkungselement 17 in der Formgebungsvorrichtung 20 hergestellt werden, wozu in der Form der Formgebungsvorrichtung entsprechende Ausnehmungen vorgesehen werden können.

Selbstverständlich ist aber auch möglich, dass die Anschlusselemente außerhalb der Formgebungsvorrichtung 20 mit dem Folienwärmetauscher 8 verbunden werden.

Eventuell aufzubringende Beschichtungen können auf den Folienwärmetauscher 8 nach der Verbindung des ersten mit dem zweiten Folienmaterial 10, 11 und nach der Ausbildung der zumindest einen Fluidleitung(en) 9 aufgebracht werden, sofern sie nicht ohnehin bereits bei der Herstellung des ersten und/oder des zweiten Folienmaterials 10, 11 berücksichtigt worden sind.

Die beiden Folienmaterialien 10, 11 können auch durch andere Schweißverfahren miteinander verbunden werden, also nicht nur durch die thermische Behandlung in der Formgebungsvorrichtung 20. Beispielsweise können das erste und das zweite Folienmaterial durch Temperaturimpulsschweißen, Laserschweißen, IR-Schweißen, Ultraschallschweißen, Hochfrequenzschweißen, miteinander verbunden werden.

Im Voranstehenden wurde der Folienwärmetauscher 8 bzw. wurde das Wärmeübertragungselement 2 zur Verwendung in der Solarthermie-Anlage 1 (Fig. 1) als Absorber beschrieben. Das Wärmeübertragungselement 2 bzw. der Folienwärmetauscher 8 kann aber generell als Wärmetauscher verwendet werden. In dieser Ausführungsvariante kann das Wärmeübertragungselement 2 mehr als einen Fluidkreislauf aufweisen bzw. an mehr als einen Fluidkreislauf anschließbar ausgeführt sein. Dazu weist das Wärmeübertragungselement 2 mehr als eine Fluidleitung 9 auf, die nicht miteinander strömungsverbunden sind. Beispielsweise können die Fluidleitungen 9 in Art eines Kreuzstrom-, eines Gegenstrom- oder eines Gleichstromwärmtauschers angeordnet sein, wie dies an sich aus dem technischen Gebiet der Wärmetauscher bekannt ist.

Die Ausführungsbeispiele zeigen mögliche Ausführungsvarianten des Wärmeübertragungselementes 2 bzw. des Folienwärmetauschers 8 bzw. des Verfahrens zur Herstellung des Wärmeübertragungselementes 2 bzw. des Folienwärmetauschers 8, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus des Wärmeübertragungselementes 2 bzw. des Folienwärmetauschers 8 diese bzw. deren Bestandteile teilweise unmaßstäblich und/oder vergrößert und/oder verkleinert dargestellt wurden.

### Bezugszeichenaufstellung

- 1: Solarthermie-Anlage
- 2: Wärmeübertragungselement
- 3: Wärmespeicher
- 4: Zulaufleitung
- 5: Ablaufleitung

- 6: Wärmetauscher
- 7: Leitung
- 8: Folienwärmetauscher
- 9: Fluidleitung
- 10: Folienmaterial

- 11: Folienmaterial
- 12: Verbindungsbereich
- 13: Kunststofffolie
- 14: Verstärkungsschicht
- 15: Metallfolie

- 16: Kunststofffolie
- 17: Verstärkungselement
- 18: Vorratsrolle
- 19: Vorratsrolle
- 20: Formgebungsvorrichtung

- 21: Trennvorrichtung
- 22: Extruder
- 23: Leitung

## Patentansprüche

1. Verfahren zur Herstellung eines Wärmeübertragungselements (2), insbesondere eines Solarthermie-Kollektors, umfassend die Schritte:
- Bereitstellen eines ersten Folienmaterials (10) umfassend eine erste Kunststofffolie (13),
- Bereitstellen eines zweiten Folienmaterials (11) umfassend eine zweite Kunststofffolie (16),
- Verbinden des ersten Folienmaterials (10) mit dem zweiten Folienmaterial (11) unter Ausbildung zumindest einer Fluidleitung (9) zwischen dem ersten und dem zweiten Folienmaterial (10, 11), wobei die erste Kunststofffolie (13) und die zweite Kunststofffolie (16) partiell stoffschlüssig und/oder mechanisch, insbesondere durch Nähen, in Verbindungsbereichen (12) miteinander verbunden werden, sodass zwischen den Verbindungsbereichen (12) zumindest ein Hohlraum entsteht, der die zumindest eine Fluidleitung (9) bildet,
**dadurch gekennzeichnet, dass** als erstes und/oder als zweites Folienmaterial (10, 11) eine Verbundfolie verwendet wird, umfassend die erste oder zweite Kunststofffolie (13, 16), eine damit verbundene Verstärkungsschicht (14) zur Verbesserung der Steifigkeit und Festigkeit speziell bei Temperaturen über Raumtemperatur bis hin zur Siegeltemperatur und eine mit der Verstärkungsschicht (14) verbundene Metallfolie (15) oder eine mit der Verstärkungsschicht (14) verbundene metallisierte weitere Kunststofffolie, wobei die Metallisierung zwischen der Verstärkungsschicht (14) und der weiteren Kunststofffolie angeordnet wird.

2. Verfahren nach Anspruch 1, **dadurch gekennzeichnet, dass** die stoffschlüssige Verbindung durch Schweißen oder Kleben hergestellt wird.

3. Verfahren nach Anspruch 1 oder 2, **dadurch gekennzeichnet, dass** während oder nach der Verbindung der ersten mit der zweiten Kunststofffolie (13, 16) auf dem ersten und/oder dem zweiten Folienmaterial (10, 11) zumindest ein Verstärkungselement (17) aus einem Kunststoff hergestellt wird.

4. Verfahren nach Anspruch 3, **dadurch gekennzeichnet, dass** das zumindest eine Verstärkungselement (17) in der Laminiervorrichtung oder in der Presse hergestellt und mit dem ersten und/oder dem zweiten Folienmaterial (10, 11) verbunden wird.

5. Verfahren nach einem der Ansprüche 1 bis 4, **dadurch gekennzeichnet, dass** an dem Wärmeübertragungselement (2) Anschlusselemente zur Verbindung des Wärmeübertragungselementes (2) mit einem Fluidkreislauf ausgebildet werden.

6. Verfahren nach Anspruch 5, **dadurch gekennzeichnet, dass** die Anschlusselemente (2) aus einem Kunststoff hergestellt werden.

7. Verfahren nach einem der Ansprüche 1 bis 6, **dadurch gekennzeichnet, dass** das erste und/oder zweite Folienmaterial (10, 11) mit einer Beschichtung versehen wird, die die Höchsttemperatur des Wärmeübertagungselementes (2) auf eine Maximaltemperatur, insbesondere auf maximal 100 °C beschränkt.

8. Wärmeübertragungselement (2) umfassend einen Folienwärmetauscher (8) mit zumindest einer Fluidleitung (9), die durch die Verbindung eines ersten Folienmaterials (10) mit einem zweiten Folienmaterial (11) zwischen dem ersten und dem zweiten Folienmaterial (10, 11) ausgebildet ist, wobei das erste Folienmaterial (10) eine erste Kunststofffolie (13) aufweist und das zweite Folienmaterial (11) eine zweite Kunststofffolie (16) aufweist, wobei die erste und die zweite Kunststofffolie (13, 16) partiell in Verbindungsbereichen (12) miteinander verbunden sind, sodass zwischen den Verbindungsbereichen (12) zumindest ein Hohlraum ausgebildet ist, der die zumindest eine Fluidleitung (9) bildet, **dadurch gekennzeichnet, dass** das erste Folienmaterial (10) aus einem Folienlaminat besteht, das die erste Kunststofffolie (13), eine damit verbundene Verstärkungsschicht (14) zur Verbesserung der Steifigkeit und Festigkeit speziell bei Temperaturen über Raumtemperatur bis hin zur Siegeltemperatur, (14), eine mit der Verstärkungsschicht (14) verbundene Metallfolie (15) oder eine mit der Verstärkungsschicht (14) verbundene metallisierte weitere Kunststofffolie aufweist, wobei Metallisierung zwischen der Verstärkungsschicht (14) der weiteren Kunststofffolie angeordnet ist.

9. Wärmeübertragungselement (2) nach Anspruch 8, **dadurch gekennzeichnet, dass** zweite Folienmaterial (11) aus einem Folienlaminat besteht, das die zweite Kunststofffolie (16), eine damit verbundene Verstärkungsschicht (14), eine mit der Verstärkungsschicht (14) verbundene Metallfolie (15) oder eine mit der Verstärkungsschicht (14) verbundene metallisierte weitere Kunststofffolie aufweist.

10. Wärmeübertragungselement (2) nach Anspruch 8 oder 9, **dadurch gekennzeichnet, dass** das Verstärkungsschicht (14) eine Faserverstärkung ist oder diese und/oder eine mineralische Füllung aufweist.

11. Wärmeübertragungselement (2) nach Anspruch 10, **dadurch gekennzeichnet, dass** die Faserverstärkung durch ein Gewebe gebildet ist.

12. Wärmeübertragungselement (2) nach Anspruch 10 oder 11, **dadurch gekennzeichnet, dass** eine aus der Faserverstärkung bestehende Schicht ein Flächengewicht zwischen 100 g/m² und 250 g/m² aufweist.

13. Wärmeübertragungselement (2) nach einem der Ansprüche 8 bis 12, **dadurch gekennzeichnet, dass** die erste Kunststofffolie (13) und/oder die zweite Kunststofffolie (16) und/oder die metallisierte weitere Kunststofffolie aus einem Kunststoff besteht/bestehen, der ausgewählt ist aus einer Gruppe bestehend aus PE, POM, PA, PPS, vernetzte Polyolefine, thermoplastische Elastomere auf Ether-/Ester Basis, Styrol-Block-Copolymere, Silikonelastomere.

14. Wärmeübertragungselement (2) nach einem der Ansprüche 8 bis 13, **dadurch gekennzeichnet, dass** auf dem ersten und/oder dem zweiten Folienmaterial (10, 11) zumindest ein, insbesondere faserverstärktes, Verstärkungselement (17) angeordnet und mit dem ersten und/oder dem zweiten Folienmaterial (10, 11) verbunden ist.

## Claims

1. A method for producing a heat transfer element (2), in particular a solar thermal collector, comprising the steps:
- providing a first film material (10) comprising a first plastic film (13),
- providing a second film material (11) comprising a second plastic film (16),
- joining the first film material (10) to the second film material (11), forming at least one fluid line (9) between the first and the second film material (10, 11), wherein the first plastic film (13) and the second plastic film (16) are partially joined to one another by material bonding and/or mechanically, in particular by sewing, in joining regions (12), so that at least one cavity, which forms the at least one fluid line (9), is formed between the joining regions (12),
**characterized in that** a composite film is used as the first and/or as the second film material (10, 11), comprising the first or second plastic film (13, 16), a reinforcing layer (14) connected thereto for improving the rigidity and strength, in particular at temperatures above room temperature up to the sealing temperature, and a metal film (15) connected to the reinforcing layer (14) or a metallized further plastic film connected to the reinforcing layer (14), wherein the metallization is arranged between the reinforcing layer (14) and the further plastic film.

2. The method according to claim 1, **characterized in that** the materially bonded connection is established by welding or bonding.

3. The method according to claim 1 or 2, **characterized in that** at least one reinforcing element (17) made of a plastic material is produced on the first and/or the second film material (10, 11) during or after the joining of the first to the second plastic film (13, 16).

4. The method according to claim 3, **characterized in that** the at least one reinforcing element (17) is produced in the laminating device or in the press and is joined to the first and/or the second film material (10, 11).

5. The method according to one of claims 1 to 4, **characterized in that** connecting elements for connecting the heat transfer element (2) to a fluid circuit are formed on the heat transfer element (2).

6. The method according to claim 5, **characterized in that** the connecting elements (2) are made of a plastic.

7. The method according to one of claims 1 to 6, **characterized in that** the first and/or second film material (10, 11) is provided with a coating which limits the highest temperature of the heat transfer element (2) to a maximum temperature, in particular to a maximum of 100 °C.

8. A heat transfer element (2) comprising a film heat exchanger (8) having at least one fluid conduit (9) formed by the joining of a first film material (10) to a second film material (11) between the first and the second film materials (10, 11), wherein the first film material (10) comprises a first plastic film (13) and the second film material (11) comprises a second plastic film (16), wherein the first and the second plastic films (13, 16) are partially connected to each other in joining regions (12) so that at least one cavity, which forms the at least one fluid conduit (9), is formed between the joining regions (12), **characterized in that** the first film material (10) consists of a film laminate which comprises the first plastic film (13), a reinforcing layer (14) connected thereto for improving the rigidity and strength, in particular at temperatures above room temperature up to the sealing temperature, a metal film (15) connected to the reinforcing layer (14) or a metallized further plastic film connected to the reinforcing layer (14), wherein the metallization is arranged between the reinforcing layer (14) of the further plastic film.

9. The heat transfer element (2) according to claim 8, **characterized in that** the second film material (11) consists of a film laminate comprising the second plastic film (16), a reinforcing layer (14) connected thereto, a metal film (15) connected to the reinforcing layer (14) or a metallized further plastic film connected to the reinforcing layer (14).

10. The heat transfer element (2) according to claim 8 or 9, **characterized in that** the reinforcing layer (14) is a fiber reinforcement or comprises a fiber reinforcement and/or a mineral filling.

11. The heat transfer element (2) according to claim 10, **characterized in that** the fiber reinforcement is formed by a woven fabric.

12. The heat transfer element (2) according to claim 10 or 11, **characterized in that** a layer consisting of the fiber reinforcement has a weight per unit area between 100 g/m² and 250 g/m².

13. The heat transfer element (2) according to one of claims 8 to 12, **characterized in that** the first plastic film (13) and/or the second plastic film (16) and/or the metalized further plastic film consists/consist of a plastic material that is selected from a group consisting of PE, POM, PA, PPS, cross-linked polyolefins, thermoplastic elastomers on ether basis/ester basis, styrene block copolymers, silicone elastomers.

14. The heat transfer element (2) according to one of claims 8 to 13, **characterized in that** at least one, in particular fiber-reinforced, reinforcing element (17) is arranged on the first and/or the second film material (10, 11) and is connected to the first and/or the second film material (10, 11).

## Revendications

1. Procédé de fabrication d'un élément de transmission de chaleur (2), plus particulièrement d'un collecteur d'énergie solaire thermique, comprenant les étapes suivantes :
- mise à disposition d'un premier matériau en feuille (10) comprenant une première feuille de matière plastique (13) ;
- mise à disposition d'un deuxième matériau en feuille (11) comprenant une deuxième feuille de matière plastique (16),
- raccordement du premier matériau en feuille (10) avec le deuxième matériau en feuille (11) en formant au moins une conduite de fluide (9) entre les premier et deuxième matériaux en feuilles (10, 11), dans lequel la première feuille de matière plastique (13) et la deuxième feuille de matière plastique (16) sont reliées entre elles partiellement par liaison de matière et/ou mécaniquement, plus particulièrement par couture, dans des zones de liaison (12), de sorte que, entre les zones de liaison (12), au moins une cavité se forme, qui constitue l'au moins une conduite de fluide (9),
**caractérisé en ce que**, en tant que premier et/ou deuxième matériau en feuille (10, 11), on utilise une feuille composite comprenant les première et deuxième feuilles de matière plastique (13, 16), une couche de renforcement (14) relié avec celles-ci, afin d'améliorer la rigidité et la résistance, plus spécifiquement à des températures au-delà de la température ambiante jusqu'à la température de scellement, et une feuille métallique (15) reliée avec la couche de renforcement (14) ou une autre feuille de matière plastique métallisée reliée avec la couche de renforcement (14), dans lequel la métallisation est disposée entre la couche de renforcement (14) et l'autre feuille de matière plastique.

2. Procédé selon la revendication 1, **caractérisé en ce que** la liaison par liaison de matière est réalisée par soudage ou par collage.

3. Procédé selon la revendication 1 ou 2, **caractérisé en ce que**, pendant ou après la liaison de la première avec la deuxième feuille de matière plastique (13, 16) sur le premier et/ou le deuxième matériau en feuille (10, 11), au moins un élément de renforcement (17) en matière plastique est réalisé.

4. Procédé selon la revendication 3, **caractérisé en ce que** l'au moins un élément de renforcement (17) est fabriqué dans le dispositif de laminage ou dans la presse et est relié avec le premier et/ou le deuxième matériau en feuille (10, 11).

5. Procédé selon l'une des revendications 1 à 4, **caractérisé en ce que**, au niveau de l'élément de transmission de chaleur (2) sont formés des éléments de raccordement pour la liaison des éléments de transmission de chaleur (2) avec un circuit de fluide.

6. Procédé selon la revendication 5, **caractérisé en ce que** les éléments de raccordement (2) sont constitués d'une matière plastique.

7. Procédé selon l'une des revendications 1 à 6, **caractérisé en ce que** le premier et/ou le deuxième matériau en feuille (10, 11) est muni d'un revêtement qui limite la température la plus élevée de l'élément de transmission de chaleur (2) à une température maximale, plus particulièrement à 100 °C maximum.

8. Élément de transmission de chaleur (2) comprenant un échangeur thermique à feuilles (8) avec au moins une conduite de fluide (9) qui est formée grâce à la liaison d'un premier matériau en feuille (10) avec un deuxième matériau en feuille (11) entre les premier et deuxième matériaux en feuilles (10, 11), dans lequel le premier matériau en feuille (10) comprend une première feuille de matière plastique (13) et le deuxième matériau en feuille (11) comprend une deuxième feuille de matière plastique (16), dans lequel les première et deuxième feuilles de matière plastique (13, 16) sont reliées entre elles partiellement dans des zones de liaison (12), de sorte que, entre les zones de liaison (12), est formée au moins une cavité qui constitue l'au moins une conduite de fluide (9), **caractérisé en ce que** le premier matériau en feuille (10) est constitué d'un stratifié de feuilles qui comprend la première feuille de matière plastique (13), une couche de renforcement (14) reliée avec celle-ci, afin d'améliorer la rigidité et la résistance, plus spécifiquement à des températures supérieures à la température ambiante jusqu'à la température de scellement, une feuille métallique (15) reliée avec la couche de renforcement (14) ou une autre couche de matière plastique métallisée reliée avec la couche de renforcement (14), dans lequel la métallisation est disposée entre la couche de renforcement (14) et l'autre feuille de matière plastique.

9. Élément de transmission de chaleur (2) selon la revendication 8, **caractérisé en ce que** le deuxième matériau en feuille (11) est constitué d'un stratifié de feuilles qui comprend la deuxième feuille de matière plastique (16), une couche de renforcement (14) reliée avec celle-ci, une feuille métallique (15) reliée avec la couche de renforcement (14) ou une autre feuille de matière plastique métallisée reliée avec la couche de renforcement (14).

10. Élément de transmission de chaleur (2) selon la revendication 8 ou 9, **caractérisé en ce que** la couche de renforcement (14) est un renforcement par fibres ou comprend ce remplissage et/ou un remplissage minéral.

11. Élément de transmission de chaleur (2) selon la revendication 10, **caractérisé en ce que** le renforcement par fibres est constitué d'un tissu.

12. Élément de transmission de chaleur (2) selon la revendication 10 ou 11, **caractérisé en ce qu'**une couche constituée du renforcement par fibres présente un poids surfacique entre 100 g/m² et 250 g/m².

13. Élément de transmission de chaleur (2) selon l'une des revendications 8 à 12, **caractérisé en ce que** la première feuille de matière plastique (13) et/ou la deuxième feuille de matière plastique (16) et/ou l'autre feuille de matière plastique métallisée sont constituées d'une matière plastique qui est sélectionnée dans un groupe constitué du PE, POM, PA, PPS, polyoléfines réticulées, élastomères thermoplastiques à base d'éther/ester, copolymères séquencés de styrène, élastomères à base de silicone.

14. Élément de transmission de chaleur (2) selon l'une des revendications 8 à 13, **caractérisé en ce qu'**au moins un élément de renforcement (17), plus particulièrement renforcé par des fibres, est disposé sur le premier et/ou deuxième matériau en feuille (10, 11) et est relié avec le premier et/ou le deuxième matériau en feuille (10, 11).
